# EUROPEAN PATENT SPECIFICATION

(11) **EP 2 023 541 B1**
(45) Date of publication and mention of the grant of the patent: **13.02.2013**
(21) Application number: 07015525.4
(22) Date of filing: 07.08.2007
(51) Int. Cl.: H04L 12/437, H04L 12/40, H04L 12/70

(54) **Method, device and communication system to avoid loops in an Ethernet Ring System with an underlying 802.3ad network**
Verfahren, Apparatus und Kommunikationssystem zur Vermeidung von Schleifen in einem Ethernet Ring System mit darunterliegendem 802.3ad Netzwerk
Procédé, appareil et système de communication pour éviter des boucles dans un réseau Ethernet à anneau étant sur un réseau 802.3ad

(43) Date of publication of application: 11.02.2009
(73) Proprietor: Nokia Siemens Networks Oy, 02610 Espoo (FI)
(72) Inventor: Ramalho Ribeiro dos Santos, Jose Miguel, 1750-430 Lisboa (PT); De Frias Rebelo Nunes, Pedro Ricardo, 2795016 Linda-A-Velha (PT)
(74) Representative: Bruglachner, Thomas E.

(56) References cited:
- EP-A- 1 062 787
- IEEE802.3AD: "Amendment to Carrier Sense Multiple Access with Collision Detection (CSMA/CD) Access Method and Physical Layer Specifications - Aggregation of Multiple Link Segments" 30 March 2000 (2000-03-30), IEEE , PAGES 1, 95-96, 108,114 , XP002465332

## Description

The invention relates to a method to be run in a network and to an associated device as well as to a communication system comprising said device.

An Ethernet Ring Protection (ERP) mechanism and protocol are disclosed in, e.g., EP 1 062 787 B1. In addition, there exists another ring protection mechanism called Ethernet Automatic Protection Switching (EAPS) as described in, e.g., IETF RRC3619.

Such ring protection mechanisms comprise a ring master RM (also referred to as a redundancy manager) to coordinate ring protection activities.

Protection in this sense means in particular that a link-layer loop in a physical Ethernet is avoided. The ring master is equipped to prevent the ring from forming such Ethernet loops.

When the ring master is notified that the ring is healthy (e.g., via test packets that are sent by the ring master via both of its ports), i.e. all ring nodes (network elements) and links (segments or arcs) are operational, the ring master breaks the link-layer loop by blocking traffic reception and transmission at one of its ring ports (the ring master's secondary port).

All traffic is blocked at that secondary port except for Ethernet ring protection control traffic, e.g., test packets. Preferably, such control traffic is sent via a control virtual LAN (VLAN).

From a link-layer's perspective, blocking traffic at the ring master's secondary port transforms the ring's topology into a chain of nodes (network elements). This is necessary in typical layer 2 (L2) networks (see also document IEEE 802.1 for further explanation). The ring master blocking its secondary port resulting in a topology of a chain of network elements is considered a normal operational state of the Ethernet Ring Protection mechanism.

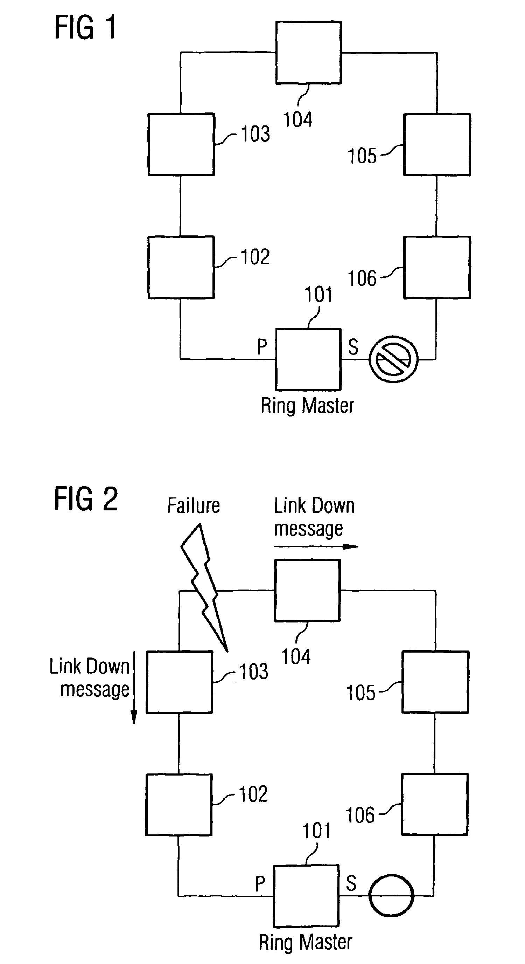

**Fig.1** shows such an ERP structure. The ring comprises network elements or nodes 101 to 106, wherein the node 101 is a Ring Master RM (also referred to as redundancy manager) with a primary port P and a secondary port S. As stated before, in normal operation, the Ring Master blocks its secondary port S resulting in the nodes 101 to 106 building a chain topology for the user traffic.

### Link or Port Failure:

When a failure emerges in the ring, e.g., a link failure of a ring segment, the Ring Master unblocks its secondary port S thereby reestablishing communication between all ring nodes.

The failure can be directly detected by the Ring Master itself if the failure occurs at one of its ports. Alternatively, the Ring Master can be notified by another network element of the ring about a failure detected at one of the network element's ports. In such case, the affected network element sends a Link Down message to the Ring Master. The Ring Master subsequently unblocks its secondary port S (see **Fig.2**).

### Failure Recovery:

When a network element of the ring detects that a failure recovered, it sends a notification to the Ring Master indicating that the link or port is operative again. This can be achieved by the network element sending a Link Up message to the Ring Master. The network element will switch over to a pre-forwarding state blocking all traffic except test packets (health-check messages conveyed via the VLAN). In this pre-forwarding state the network element waits for a message from the Ring Master to switch over to normal operation (or forwarding state) again.

The Ring Master blocks the secondary port S again and sends the message to the network element to get back to normal operation. The Ring Master allows the network element to migrate from its pre-forwarding state to normal operation (forwarding state) only after the Ring Master blocked its secondary port S. This avoids configuration of a link-layer loop.

Preferably, the Ring Master assesses the operational state of the whole ring by frequently sending heath-check packets via both of its ring interfaces, i.e. via its primary port P and its secondary port S. These health-check packets (also referred to as test packets) may be conveyed via a control VLAN. If the ring is operational, the Ring Master receives its test packets sent via the respective other interface. If the test packets are not received, the ring may be broken and protection recovery actions should be initiated.

### Link Aggregation:

One basic element in an Ethernet network is a Link Aggregation (LAG). LAG is defined in, e.g., document IEEE 802.3ad.

An optional Link Aggregation sublayer for use with CSMA/CD MACs is defined in IEEE 802.3ad. Link Aggregation allows one or more links to be aggregated together to form a Link Aggregation Group, such that a MAC Client can treat the Link Aggregation Group as if it were a single link. To this end, it specifies the establishment of DTE to DTE logical links, consisting of N parallel instances of full duplex point-to-point links operating at the same data rate.

Link Aggregation comprises an optional sublayer between a MAC Client and the MAC (or optional MAC Control sublayer).

It is possible to implement the optional Link Aggregation sublayer for some ports within a system while not implementing it for other ports; i.e., it is not necessary for all ports in a system to be subject to Link Aggregation.

Since Ethernet link bandwidth usually increases by multiplication of 10 (e.g., 10Mbps, 100Mbps, 1Gbps, etc.), LAG defines how to aggregate several (n) Ethernet links, all of the same rate, to a larger link with a bandwidth amounting to
n*{single link rate} (e.g. 8 links of 100Mbps create a LAG with 800Mbps).

An important aspect of LAG is its protection: If one of the physical links composing a LAG fails, the traffic can still be conveyed by the remaining links of the LAG and hence the traffic through the LAG is kept up.

In Ethernet Link Aggregation (LAG) according to IEEE 802.3, several Ethernet physical interfaces are combined into one single logical interface. To the Ethernet client layer, only one "logical" interface is presented. This mechanism is used to, e.g., increase bandwidth between two nodes or to allow load-sharing between several physical links. The link aggregation only fails when all physical links fail. As long as there exists at least one link that is operative, the traffic that was transmitted or received can be redirected to be transmitted or received over still operational physical link(s) that belong to the same link aggregation. This redirection operation may take one second to be completed.

When Ethernet Ring Protection is applied over Link Aggregation and one physical link fails, as stated before, the Link Aggregation will still be operational, also from the Ethernet Ring Protection point of view. However, if the failed physical link was chosen to convey ERP test packets, these packets will be lost, the ring master will assume that the ring is not operational and will initiate protection measures thereby unblocking its previously blocked (secondary) ring port. This action will immediately create a loop jeopardizing all communication in the ring network.

The object to be solved is to overcome the disadvantage as stated before and to provide an approach that is capable of handling ring networks and link aggregation thereby avoiding the creation of (temporary) loops within the ring network topology.

This problem is solved according to the features of the independent claims. Further embodiments result from the depending claims.

In order to overcome this problem a method is provided that can be run in a network or on a network component, in particular a ring master of a ring network. The network comprises several network elements (also referred to as nodes) that are connected via a ring, wherein one of the network element is a ring master comprising a primary port and a secondary port. The method comprises the steps:
- a failure is detected by the ring master;
- the ring master checks for a second message and based on the content of the second message unblocks the secondary port.

As the ring master checks and/or in particular waits for the second message it can be detected whether or not the secondary port of the ring master can be unblocked without creating a loop in the ring network.

The ring master unblocks its secondary port if the second message indicates that there is no broken link within a link aggregation.

Hence, if there is no broken link in the link aggregation, the ring master can immediately unblock its secondary port in order to maintain traffic flow throughout the ring network.

The second message can be a PhyDown message (indicating that a physical layer is broken-down) of the link aggregation.

It is also an embodiment that the link aggregation covers at least one segment of the network.

According to a further embodiment, the link aggregation comprises at least two links in parallel, wherein upon failure of one link of the link aggregation the remaining at least one link conveys traffic that was destined to be transmitted via the failed link.

In yet an embodiment, the failure is detected by the ring master if at least one first message does not arrive at the primary port or at the secondary port of the ring master.

In another embodiment, the at least one first message is a test message (also referred to as a health check message).

In a further embodiment, the at least one first message is sent by the ring master.

Hence, the ring master can send a test message via at least one of its ports and receive it at the respective other port after a delay (time for the signal to be conveyed through the ring network). Hence, if the test message does not arrive within a predetermined period of time, the ring master may notify a failure.

However, in a next embodiment the failure corresponds to a loss of at least one first message, in particular to at least one test message.

Hence, if one or a predetermined number of test package(s) do(es) not arrive at the ring master within a certain time, the ring master assumes a failure that in this case corresponds to a loss of test packages (i.e., a loss of at least one first message).

It is an embodiment that the at least one first message is sent by the ring master via its primary port and via its secondary port.

In a further embodiment, the at least one first message is sent via a control virtual local area network (control VLAN).

In another embodiment the method comprises the steps:
- if the second message indicates that there is a broken link within the link aggregation the ring master waits a predetermined period of time;
- if the failure persists after the predetermined period of time, the ring master unblocks its secondary port.

Hence the second message indicates that the link aggregation has lost at least one link. However, there may be links remaining within this particular link aggregation that may still be able to convey the traffic. Usually, link aggregation needs some time until the still active links are able to convey the traffic of the failed link. After such period of time, the traffic is going to flow normally again. In such case it would have been fatal for the ring master to unblock its secondary port, because due to the recovery of the link aggregation this would have lead to a loop within the ring network.

However, if the period of time that is usually necessary for the link aggregation to redistribute the traffic among the still active links will be over and still there will be no at least one first message received at a port of the ring master, this is a very strong indication that the whole link aggregation (not only a single link within the link aggregation) may be down due to a severe link failure. In such case, the ring master can initiate protection thereby unblocking its secondary port.

If the time for the link aggregation to reconfigure passes and the at least one first test message is received at a port of the ring master (again), the ring master does not unblock its secondary port. In this case, waiting for that predetermined period of time avoided a precipitate unblocking of the ring master's secondary port that would have led to a loop in the ring network.

The problem stated supra is also solved by a device comprising a processor unit that is arranged and/or equipped such that the method as described herein is executable on said processor.

In an embodiment, said device is a communication device, in particular a network element or a ring master.

Also, the problem stated above can be solved by a communication system comprising the device as described herein.

Embodiments of the invention are shown and illustrated in the following figures:
- Fig.3: shows a ring network comprising network elements and a link aggregation that connects two network elements of the ring network;
- Fig.4: shows a flow chart illustrating the steps of a ring master to perform to check whether or not it can initiated ring protection in a ring network comprising a link aggregation.

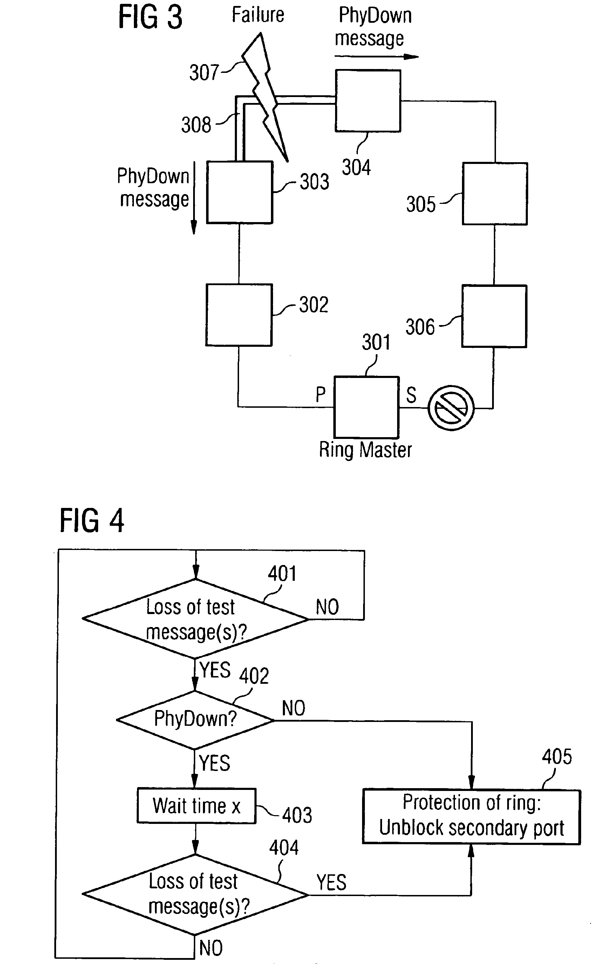

**Fig.3** shows a ring network comprising network elements (or nodes) 301 to 304, wherein node 301 is a Ring Master of this ring network. The Ring Mater 301 comprises a primary port P and a secondary port S. In normal operation, the secondary port S of the Ring Master 301 is blocked.

Network element 303 and network element 304 are connected via a link aggregation 308 comprising several links. In case of a failure 307 at the link aggregation 308, the Ring Master 301 has to decide whether the whole link aggregation 308 is broken down or only a single link within the link aggregation is defective and hence the link aggregation 308 will recover after a predetermined period of time. In the latter case in order to avoid a loop in the ring network, the Ring Master 301 should not initiate link protection, i.e. it should not unblock its secondary port S.

The Ring Master 301 sends test messages (also referred to as health check messages) via its primary port P and via its secondary port S. Such test messages are preferably sent via a control VLAN. By receiving the test messages at its respective port, the Ring Master is aware of the health of the ring. If test messages are missing, a link failure may have occurred.

In case test messages are not longer received at the port(s) of the Ring Master 301 and in case no Link-Down message is received, the physical interfaces of the network elements within the ring network may be operational. However, there may be a problem on a different OSI layer within the ring network, e.g. a physical link failure in a path using link aggregation may have occurred.

If a single link within a link aggregation is broken down, such failure should not be corrected by an Ethernet ring protection mechanism. Such protection should only be provided if all links within the link aggregation are defective.

If not all links of a link aggregation fail, the traffic can be redirected over the still operational physical links of this link aggregation. This redirection operation takes some time, e.g., one second, to be completed.

If the test messages were conveyed via a particular link of the link aggregation that became defective, the Ring Master 301 will not receive these test messages until link aggregation mechanisms finish redirections. In order not to unblock its secondary port S, the Ring Master 301 has to be informed that there is a chance for a link aggregation to recover the failure within a predetermined period of time.

In Fig.3, the network elements 303 and 304 each has ports that are configured with link aggregation 308. If one of the network elements 303 or 304 recognizes a failure at the link aggregation, it sends a PhyDown message to the Ring Master 301 via its opposite interface/port.

Due to missing test messages the Ring Master 301 can determine whether or not the ring network is healthy. The Ring Master 301 shall act as follows:
a) Ring network is not healthy AND PhyDown message received: There is a failure that may be protected by the link aggregation 308 itself. The Ring Master 301 temporarily suppresses protection actions.
b) Ring network is not healthy AND No PhyDown message received: There is no failure of or within the link aggregation 308, the Ring Master should initiate protection actions, i.e. unblock its secondary port.
c) Ring network is healthy AND PhyDown message received: There is a failure that is protected by the link aggregation 308, the Ring Master 308 does not have to protect the ring network.

**Fig.4** shows a flow chart illustrating various states as well as necessary actions depending on certain messages that result from failures within a ring network.

In a step 401 the Ring Master may detect a failure in the ring due to a loss of test messages and switch to a step 402 thereby checking whether a PhyDown message has been received. If no PhyDown message has been received, the failure of a link cannot be restored by the link aggregation. Hence, the Ring Master has to protect the ring thereby unblocking its secondary port (step 405).

If the Ring Master receives a PhyDown message it branches to a step 403 waiting for a predetermined time x (required by the link aggregation to distribute the traffic among its still operative links). After this time x the Ring Master checks whether test messages are (still) missing. If this is the case, it is branched to the step 405 thereby initiating protection of the ring and unblocking the Ring Master's secondary port.

If no test messages are lost, the link aggregation has recovered and there is no need to protect the ring. Hence, it is branched to step 401.

### Advantages of the approach provided herewith:

One advantage of this solution is that the ring master determines whether a link failure is related to a single link within a link aggregation and hence it can be avoided to immediately initiate a protection of the ring thereby creating a loop within the ring network.

The time period the ring master has to wait (see step 403 in Fig.4) should be long enough to ensure that the traffic in the link aggregation can be redistributed among the operational links and that test messages can be received at the port(s) of the ring manager.

## Claims

1. A method to be run in a network, wherein
- the network comprises several network elements (101, ..., 106) that are interconnected to form a ring;
- at least one ring segment interconnection (308) comprises more than one link, the more than one links operated according to a link aggregation scheme;
- one of the network elements is a ring master (101) comprising a primary port (P) and a secondary port (S), the ports connected in the ring to different ring segments at opposite sides of the ring master;
- the ring master monitors the health of the ring using a first type of messages;
- when the ring is healthy, the ring master breaks the link-layer loop by blocking traffic reception and transmission except for the mentioned first type of messages at its secondary port;
- a ring failure is detected by the ring master;
- the method being **characterized by** comprising the steps: the ring master checks for the availability of a second type of message received from a network element adjacent to the at least one ring segment interconnection (308) that comprises more than one link, the second type of message indicating a failure of at least one link in that segment; and
- if no such message has been received the ring master unblocks its secondary port, while its primary port remains unblocked;
- if such message has been received, the ring master keeps its secondary port blocked.

2. The method according to claim 1, wherein, if a message of the second type has been received, the ring master waits, if the failure condition persists beyond the period of time that is usually necessary for the link aggregation to redistribute the traffic among the still active links and, if this is the case, finally unblocks its secondary port, while its primary port remains unblocked.

3. The method according to any of the preceding claims,
wherein the ring failure is detected by the ring master if at least one message of the first type does not arrive at the primary port or at the secondary port of the ring master.

4. The method according to claim 3, wherein the at least one message of the first type is a test message.

5. The method according to any of claims 3 or 4, wherein the at least one message of the first type is sent by the ring master.

6. The method according to any of claims 3 to 5, wherein the at least one message of the first type is sent by the ring master via its primary port and via its secondary port.

7. The method according to any of claims 3 to 6, wherein the at least one message of the first type is sent via a control virtual local area network (VLAN).

8. A device comprising a processor unit that is arranged such that the method according of any of the preceding claims is executed on said processor.

9. The device according to claim 8, wherein said device is a communication device, in particular a network element or a ring master.

10. A communication system comprising the device according to any of claims 8 or 9.

## Patentansprüche

1. Verfahren zur Ausführung in einem Netz, wobei
- das Netz mehrere Netzelemente (101, ..., 106) umfasst, die zur Bildung eines Rings zusammengeschaltet sind;
- mindestens eine Ringabschnittzusammenschaltung (308) mehr als eine Verbindung umfasst, wobei die mehr als eine Verbindung entsprechend einem Kanalbündelungssystem betrieben wird;
- eines der Netzelemente ein Ringmaster (101) ist, umfassend einen Primäranschluss (P) und einen Sekundäranschluss (S), wobei die Anschlüsse im Ring an unterschiedliche Ringabschnitte an entgegengesetzten Seiten des Ringmasters angeschlossen sind;
- der Ringmaster die fehlerfreie Funktion des Rings unter Verwendung einer ersten Art von Nachrichten überwacht;
- wenn der Ring fehlerfrei ist, der Ringmaster die Schleife auf der Verbindungsschicht durch Blockieren von Verkehrsempfang und -übertragung mit Ausnahme für die erwähnte erste Art von Nachrichten an seinem Sekundäranschluss unterbricht;
- ein Fehler im Ring durch den Ringmaster erkannt wird;
- das Verfahren **gekennzeichnet ist durch** Umfassen der Schritte:
- der Ringmaster prüft das Vorhandensein einer zweiten Art von Nachricht, empfangen von einem Netzelement, das der mindestens einen Ringabschnittzusammenschaltung (308), die mehr als eine Verbindung umfasst, benachbart ist, wobei die zweite Art von Nachricht einen Ausfall von mindestens einer Verbindung in diesem Abschnitt anzeigt; und
- wenn keine solche Nachricht empfangen worden ist, schaltet der Ringmaster seinen Sekundäranschluss frei, während sein Primäranschluss freigeschaltet bleibt;
- wenn eine solche Nachricht empfangen worden ist, hält der Ringmaster seinen Sekundäranschluss blockiert.

2. Verfahren nach Anspruch 1, wobei, wenn eine Nachricht der zweiten Art empfangen worden ist, der Ringmaster wartet, ob der Fehlerzustand über die Zeitdauer hinaus bestehen bleibt, die üblicherweise dafür erforderlich ist, dass das Kanalbündelungssystem den Verkehr unter den noch aktiven Verbindungen wieder verteilt, und wenn dies der Fall ist, abschließend seinen Sekundäranschluss freischaltet, während sein Primäranschluss freigeschaltet bleibt.

3. Verfahren nach einem beliebigen der vorhergehenden Ansprüche, wobei der Fehler im Ring durch den Ringmaster erkannt wird, wenn mindestens eine Nachricht der ersten Art nicht am Primäranschluss oder am Sekundäranschluss des Ringmasters ankommt.

4. Verfahren nach Anspruch 3, wobei die mindestens eine Nachricht der ersten Art eine Prüfnachricht ist.

5. Verfahren nach einem beliebigen der Ansprüche 3 oder 4, wobei die mindestens eine Nachricht der ersten Art vom Ringmaster gesendet wird.

6. Verfahren nach einem beliebigen der Ansprüche 3 bis 5, wobei die mindestens eine Nachricht der ersten Art vom Ringmaster über seinen Primäranschluss und über seinen Sekundäranschluss gesendet wird.

7. Verfahren nach einem beliebigen der Ansprüche 3 bis 6, wobei die mindestens eine Nachricht der ersten Art über ein virtuelles lokales Netzwerk (VLAN - Virtual Local Area Network) für die Netzsteuerung gesendet wird.

8. Vorrichtung umfassend eine Prozessoreinheit, die so eingerichtet ist, dass das Verfahren nach einem beliebigen der vorhergehenden Ansprüche auf diesem Prozessor ausgeführt wird.

9. Vorrichtung nach Anspruch 8, wobei die Vorrichtung eine Kommunikationsvorrichtung ist, insbesondere ein Netzelement oder ein Ringmaster.

10. Kommunikationssystem umfassend die Vorrichtung nach einem beliebigen der Ansprüche 8 oder 9.

## Revendications

1. Un procédé destiné à être exécuté dans un réseau, dans lequel
- le réseau comprend plusieurs éléments de réseau (101, ..., 106) qui sont interconnectés de façon à former un anneau,
- au moins une interconnexion de segments d'anneau (308) comprend plus d'une liaison, les plus d'une liaisons étant exploitées selon un système d'agrégation de liaisons,
- l'un des éléments de réseau est un maître d'anneau (101) comprenant un port primaire (P) et un port secondaire (S), les ports étant raccordés dans l'anneau à des segments d'anneau différents sur des côtés opposés du maître d'anneau,
- le maître d'anneau surveille la santé de l'anneau au moyen d'un premier type de messages,
- lorsque l'anneau est en bonne santé, le maître d'anneau rompt la boucle liaison-couche en bloquant la transmission et la réception de trafic sauf pour le premier type de messages mentionné au niveau de son port secondaire,
- une défaillance d'anneau est détectée par le maître d'anneau,
le procédé étant **caractérisé en ce qu'**il comprend les étapes suivantes :
- le maître d'anneau vérifie la disponibilité d'un deuxième type de messages reçue d'un élément de réseau adjacent à la au moins une interconnexion de segments d'anneau (308) qui comprend plus d'une liaison, le deuxième type de messages indiquant une défaillance d'au moins une liaison dans ce segment, et
- si aucun message de ce type n'a été reçu, le maître d'anneau débloque son port secondaire, tandis que son port primaire reste débloqué,
- si un message de ce type a été reçu, le maître d'anneau maintient son port secondaire bloqué.

2. Le procédé selon la revendication 1, dans lequel, si un message du deuxième type a été reçu, le maître d'anneau attend de voir si l'état de défaillance persiste au-delà de la période temporelle qui est généralement nécessaire à l'agrégation de liaisons pour redistribuer le trafic parmi les liaisons toujours actives et, si c'est le cas, débloque au bout du compte son port secondaire, tandis que son port primaire reste débloqué.

3. Le procédé selon l'une quelconque des revendications précédentes, dans lequel la défaillance d'anneau est détectée par le maître d'anneau si au moins un message du premier type n'arrive pas au niveau du port primaire ou au niveau du port secondaire du maître d'anneau.

4. Le procédé selon la revendication 3, dans lequel le au moins un message du premier type est un message de test.

5. Le procédé selon l'une quelconque des revendications 3 ou 4, dans lequel le au moins un message du premier type est envoyé par le maître d'anneau.

6. Le procédé selon l'une quelconque des revendications 3 à 5, dans lequel le au moins un message du premier type est envoyé par le maître d'anneau par l'intermédiaire de son port primaire et par l'intermédiaire de son port secondaire.

7. Le procédé selon l'une quelconque des revendications 3 à 6, dans lequel le au moins un message du premier type est envoyé par l'intermédiaire d'un réseau local virtuel (VLAN) de commande.

8. Un dispositif comprenant une unité de traitement qui est agencée de sorte que le procédé selon l'une quelconque des revendications précédentes soit exécuté sur ledit processeur.

9. Le dispositif selon la revendication 8, dans lequel ledit dispositif est un dispositif de communication, plus particulièrement un élément de réseau ou un maître d'anneau.

10. Un système de communication comprenant le dispositif selon l'une quelconque des revendications 8 ou 9.
